(19) Europäisches Patentamt
European Patent Office
Office européen des brevets

(11) **EP 4 708 851 A1**

(12) **EUROPEAN PATENT APPLICATION**
published in accordance with Art. 153(4) EPC

(43) Date of publication:
**11.03.2026 Bulletin 2026/11**

(21) Application number: **24797361.3**

(22) Date of filing: **22.04.2024**

(51) International Patent Classification (IPC):
**H04N 19/105** $^{(2014.01)}$ **H04N 19/109** $^{(2014.01)}$
**H04N 19/11** $^{(2014.01)}$ **H04N 19/513** $^{(2014.01)}$
**H04N 19/577** $^{(2014.01)}$ **H04N 19/593** $^{(2014.01)}$
**H04N 19/176** $^{(2014.01)}$

(52) Cooperative Patent Classification (CPC):
**H04N 19/105; H04N 19/109; H04N 19/11;
H04N 19/176; H04N 19/513; H04N 19/577;
H04N 19/593**

(86) International application number:
**PCT/KR2024/005395**

(87) International publication number:
**WO 2024/225705 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.04.2023 US 202363461270 P**

(71) Applicant: **LG Electronics Inc.**
**Yeongdeungpo-gu
Seoul 07336 (KR)**

(72) Inventors:
• **PARK, Naeri
Seoul 06772 (KR)**
• **LIM, Jaehyun
Seoul 06772 (KR)**
• **AHN, Yongjo
Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **IMAGE ENCODING/DECODING METHOD AND APPARATUS, AND RECORDING MEDIUM FOR STORING BITSTREAM**

(57) An image decoding/encoding method and apparatus according to the present disclosure may derive, for the current block, a plurality of prediction blocks including a first prediction block and a second prediction block and derive a final prediction block of the current block on the basis of the first prediction block and the second prediction block.

**FIG.4**

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide a method and an apparatus for deriving a multi-prediction block for a current block.

The present disclosure is to provide a method and an apparatus for deriving a multi-prediction block according to a prediction mode.

[Technical Solution]

An image decoding method and apparatus according to the present disclosure may derive a plurality of prediction blocks including a first prediction block and a second prediction block for a current block, derive a final prediction block of the current block based on the first prediction block and the second prediction block and reconstruct the current block based on a final prediction block of the current block.

In an image decoding method and apparatus according to the present disclosure, the first prediction block may be derived based on at least one of a first L0 motion vector predictor or a second L1 motion vector predictor, and the second prediction block may be derived based on at least one of a first L1 motion vector predictor or a second L0 motion vector predictor. Here, at least one of the first L0 motion vector predictor or the first L1 motion vector predictor may be derived based on a first prediction mode, and at least one of the second L0 motion vector predictor or the second L1 motion vector predictor may be derived based on a second prediction mode.

In an image decoding method and apparatus according to the present disclosure, the first prediction mode may be an AMVP mode, and the second prediction mode may be a merge mode.

In an image decoding method and apparatus according to the present disclosure, the first L0 motion vector predictor may be derived based on the first prediction mode, and the first L1 motion vector predictor may be derived based on the pre-derived first L0 motion vector predictor.

In an image decoding method and apparatus according to the present disclosure, at least one of the first L0 motion vector predictor or the second L1 motion vector predictor may be modified based on any one of a bilateral matching-based modification method or a template matching-based modification method.

In an image decoding method and apparatus according to the present disclosure, based on a pre-defined first condition, any one of the bilateral matching-based modification method or the template matching-based modification method may be selected.

In an image decoding method and apparatus according to the present disclosure, at least one of the first L1 motion vector predictor or the second L0 motion vector predictor may be modified based on any one of a bilateral matching-based modification method or a template matching-based modification method.

In an image decoding method and apparatus according to the present disclosure, based on a pre-defined second condition, any one of the bilateral matching-based modification method or the template matching-based modification method may be selected.

In an image decoding method and apparatus according to the present disclosure, whether the second condition is satisfied may be determined based on whether the first condition is satisfied.

In an image decoding method and apparatus according to the present disclosure, the first prediction block may be derived based on an inter mode, and the second prediction block may be derived based on one or more intra prediction modes for the current block. Here, one or more intra prediction modes for the current block may include at least one of a planar mode, an MPM, an MIP mode, a DIMD-based intra prediction mode, or a TIMD-based intra prediction mode.

In an image decoding method and apparatus according to the present disclosure, the first prediction block may be derived based on an inter prediction block and an intra prediction block of the current block, and the second prediction block may be derived based on an additional intra prediction mode for the current block.

In an image decoding method and apparatus according to the present disclosure, the first prediction block may be derived based on one or more block vectors derived from an IBC candidate list of the current block, and the second prediction block may be derived based on one or more intra prediction modes for the current block.

An image encoding method and apparatus according to the present disclosure may derive a plurality of prediction blocks including a first prediction block and a second prediction block for a current block, derive a final prediction block of the current block based on the first prediction block and the second prediction block, derive a residual block of the current block based on a final prediction block of the current block and encode a residual block of the current block.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and an apparatus for transmitting video/image information generated according to the image encoding method according to the present disclosure are provided.

[Advantageous Effects]

According to the present disclosure, compression efficiency may be improved by deriving a multi-prediction block for a current block and deriving a final prediction block through the weighted sum thereof.

According to the present disclosure, prediction performance and compression efficiency may be improved by proposing a method for deriving various multi-prediction blocks according to the prediction mode of a current block.

[Brief Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 shows an inter prediction method performed by a decoding apparatus 300 as an embodiment according to the present disclosure.

FIG. 5 shows a schematic configuration of an inter predictor 332 that performs an inter prediction method according to the present disclosure.

FIG. 6 shows an inter prediction method performed by an encoding apparatus 200 as an embodiment according to the present disclosure.

FIG. 7 shows a schematic configuration of an inter predictor 221 that performs an inter prediction method according to the present disclosure.

FIG. 8 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

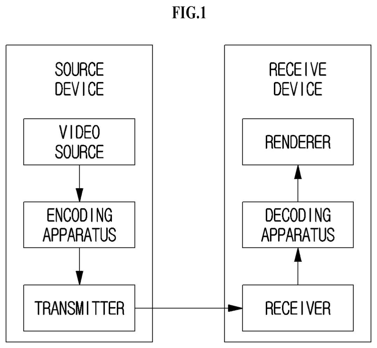

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

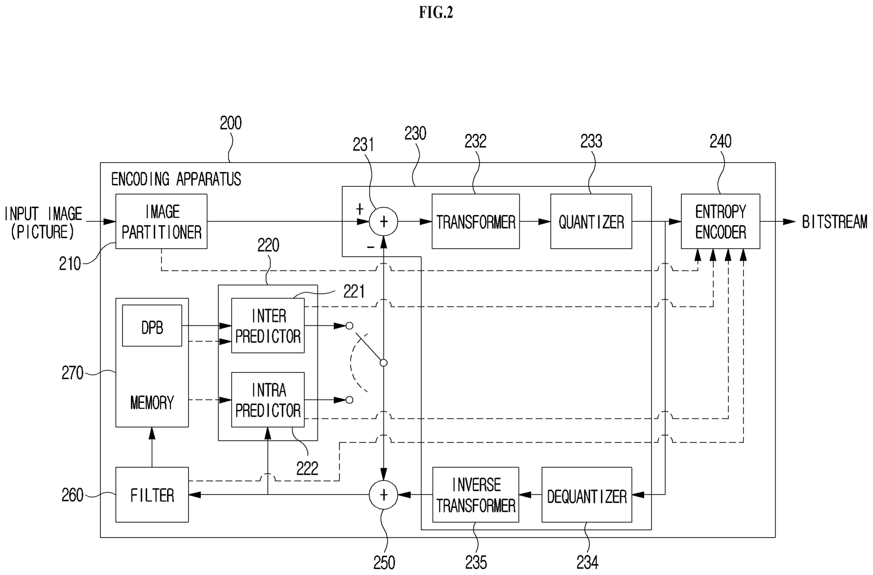

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (LO prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictor 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

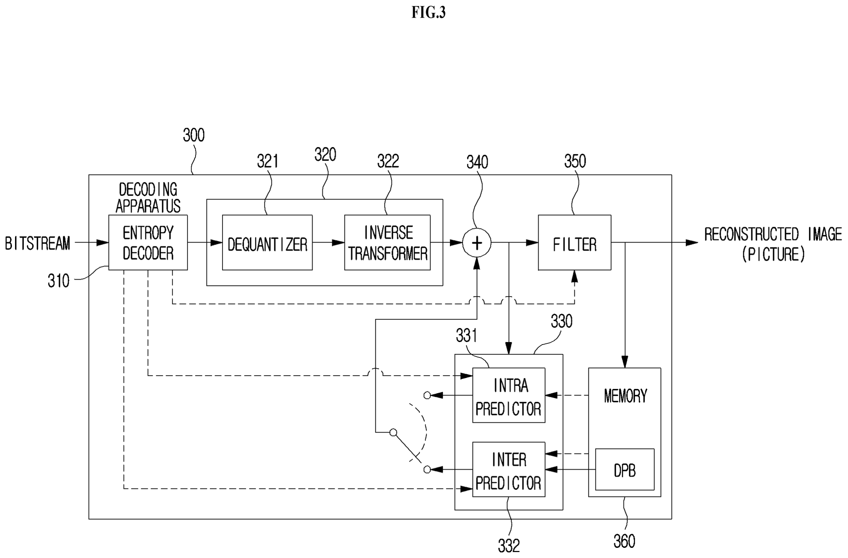

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

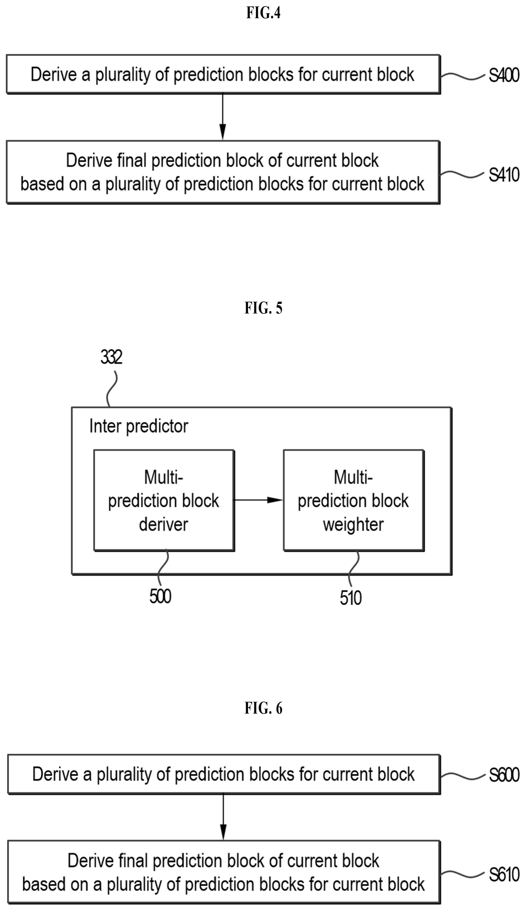

FIG. 4 shows an inter prediction method performed by a decoding apparatus 300 as an embodiment according to the present disclosure.

Referring to FIG. 4, a plurality of prediction blocks may be derived for a current block S400.

A plurality of prediction blocks for a current block may include the first prediction block and the second prediction block. The first prediction block may be derived based on the first prediction mode, and the second prediction block may be derived based on the second prediction mode. Here, the first prediction mode and the second prediction mode may be the same prediction mode or may be a different prediction mode. Hereinafter, a method for deriving the first and second prediction blocks will be described.

Embodiment 1

The present disclosure relates to a case where the first and second prediction modes are an AMVP-MERGE mode. In particular, it relates to a case where motion information for unidirectional prediction is obtained for each of an AMVP mode and a merge mode.

In case of an AMVP-MERGE mode, bidirectional motion information may be obtained for a current block. Here, bidirectional motion information may include motion information in the first prediction direction obtained based on an AMVP mode and motion information in the second prediction direction obtained based on a merge mode. The first prediction direction may be expressed as an LX direction, and the second prediction direction may be expressed as an L(1-X) direction. X may have a value of 0 or 1. It may be interpreted with the same meaning in an embodiment described later.

Specifically, at least one of an MVP index, a reference picture index or MVD information may be signaled for the first prediction direction. An MVP index may specify any one of a plurality of MVP candidates belonging to an MVP candidate list. A reference picture index may specify any one of the reference pictures belonging to a reference picture list in the first prediction direction. MVD information may refer to information regarding a motion vector difference. Based on an MVP candidate specified by the MVP index, a motion vector predictor (MVP[0][X]) for the first prediction direction of a current block may be derived. In MVP[0][X], [0] represents an AMVP mode, and [X] represents an LX direction. In other words, MVP[0][X] may represent a motion vector predictor in an LX direction derived based on an AMVP mode. MVP[0][X] may refer to the motion vector of an MVP candidate specified by the MVP index or may refer to the sum of differences between the motion vector of an MVP candidate specified by the MVP index and a motion vector derived based on the MVD information.

A merge index may be signaled for the second prediction direction. A merge index may specify any one of a plurality of merge candidates belonging to a merge candidate list. Based on a motion vector for the second prediction direction of a merge candidate specified by a merge index, a motion vector predictor (MVP[1][1-X]) for the second prediction direction of a current block may be derived. In MVP[1][1-X], [1] represents a merge mode, and [1-X] represents an L(1-X) direction. In other words, MVP[1][1-X] may represent a motion vector predictor in an L(1-X) direction derived based on a merge mode.

The first prediction block of a current block may be derived based on a motion vector predictor (MVP[0][X]) for the first prediction direction. The second prediction block of a current block may be derived based on a motion vector predictor (MVP[1][1-X]) for the second prediction direction.

At least one of the motion vector predictors (MVP[0][X], MVP[1][1-X]) for the bidirectional prediction of the current block may be modified based on any one of a bilateral matching-based modification method or a template matching-based modification method which is described later. The first prediction block and the second prediction block of a current block may be derived based on the modified motion vector predictor, respectively.

1. Bilateral Matching-based Modification Method

A cost array may be calculated by performing a search based on the position of the reference block of a current block within a predetermined search range.

The reference block of the current block may include a reference block in the first prediction direction (hereinafter, referred to as the first reference block) and a reference block in the second prediction direction (hereinafter, referred to as the second reference block). The first reference block may be specified based on motion information for the first prediction direction. The second reference block may be specified by motion information for the second prediction direction. Motion information for the first prediction direction may be obtained based on any one of an AMVP mode or a merge mode, and motion information for the second prediction direction may be obtained based on the other of an AMVP mode or a merge mode.

The cost array may be composed of a plurality of costs calculated for each search position within the search range. Each cost may be calculated as a sample difference between at least two blocks searched in both directions. As an example, a cost may be calculated as the sum of absolute difference (SAD) between at least two blocks searched in both directions. Here, a block searched in the first prediction direction is called an LX block, and a block searched in the second prediction direction is called an L(1-X) block. The cost may be calculated based on all samples belonging to LX and L(1-X) blocks or may be calculated based on some samples within LX and L(1-X) blocks.

Here, some samples refer to sub-blocks of the LX and L(1-X) blocks, and at least one of the width or height of a sub-block may be half the width or height of the LX and L(1-X) blocks. In other words, LX and L(1-X) blocks have a size of W x H, and some samples above may be a sub-block having a size of W x H/2, W/2 x H or W/2 x H/2. In this case, when some samples are a sub-block of W x H/2, some samples may be a top sub-block (or a bottom sub-block) within LX and L(1-X) blocks. When some samples are a sub-block of W/2 x H, some samples may be a left sub-block (or a right sub-block) within LX and L(1-X) blocks. When some samples are a sub-block of W/2 x H/2, some samples may be a top-left sub-block within LX and L(1-X) blocks, but are not limited thereto.

Alternatively, some samples may be defined as at least one of the even-numbered sample lines or at least one of the odd-numbered sample lines of LX and L(1-X) blocks. In this case, a sample line may be a vertical sample line or a horizontal sample line.

Alternatively, some samples may refer to a sample at a position pre-defined equally for an encoding/decoding apparatus. For example, the sample at a pre-defined position may refer to at least one of a top-left sample, a top-right sample, a bottom-left sample, a bottom-right sample, a center sample, the center sample of a sample column/row adjacent to the boundary of a current block or a sample positioned on a diagonal line within a current block within LX and L(1-X) blocks.

A search position within the search range may be a position shifted by p in the x-axis direction and by q in the y-axis direction from the position of the reference block of a current block. For example, when p and q are an integer belonging to a range of -1 to 1, the number of search positions in an integer-pel unit within a search range may be up to 9. Alternatively, when p and q are an integer belonging to a range of -2 to 2, the number of search positions in an integer-pel unit within a search range may be up to 25. However, it is not limited thereto, and p and q may belong between integers whose size (or absolute value) is greater than 2, and a search in a fractional-pel unit may be performed.

A search position within the search range may be determined based on an offset pre-defined equally for an encoding apparatus and a decoding apparatus. In other words, an offset may be defined as a disparity vector between the position of the reference block of a current block and a search position. The offset may include at least one of a non-directional offset or a directional offset. The directional offset may include an offset for at least one of a left, right, top, bottom, top-left, top-right, bottom-left or bottom-right direction. The non-directional offset may refer to an offset with a size of 0, and the directional offset may refer to an offset in which the size (or absolute value) of at least one of the x-component or y-component of an offset is greater than or equal to 1.

As an example, an offset may be defined as shown in Table 1 below.

[Table 1]

| Index(i) | 0 | 1 | 2 | 3 | 4 | 5 | 6 | 7 | 8 |
|---|---|---|---|---|---|---|---|---|---|
| dX[ i ] | -1 | 0 | 1 | -1 | 0 | 1 | -1 | 0 | 1 |
| dY[ i ] | -1 | -1 | -1 | 0 | 0 | 0 | 1 | 1 | 1 |

Table 1 defines an offset specifying a search position for each index, and dX[i] may refer to the x-component of the i-th offset and dY[i] may refer to the y-component of the i-th offset. An offset according to Table 1 may include a non-directional offset of (0,0) and 8 directional offsets. However, an index in Table 1 is just for distinguishing an offset, and does not limit the position of an offset corresponding to an index or does not limit a priority between offsets. In addition, Table 1 represents a case where the sizes of the x-component and y-component of an offset are 1, but it is just an example, and an offset in which the size of at least one of an x-component or a y-component is greater than or equal to 2 may be defined.

The offset may be defined for an L0 direction and an L1 direction, respectively. An offset for a search in an L1 direction may be determined dependently on an offset for a search in an L0 direction. As an example, when an offset for a search in an L0 direction is (p,q), an offset for a search in an L1 direction may be set as (-p,-q) through mirroring. In addition, an offset for a search in an L1 direction may be determined independently from an offset for a search in an L0 direction.

Information regarding the size and/or direction of an offset described above may be pre-defined equally for an encoding apparatus and a decoding apparatus or may be encoded in an encoding apparatus and signaled to a decoding apparatus. The information may also be variably determined by considering the above-described block attribute.

Through the above-described method, a cost corresponding to each search position (or, pre-defined offset) within a search range may be calculated. A cost with the minimum value among a plurality of costs belonging to a cost array may be identified, and a delta motion vector may be determined based on an offset corresponding to an identified cost. A motion vector predictor in a L0 direction may be modified based on a delta motion vector (deltaMV), and a motion vector predictor in a L1 direction may be modified based on a mirrored delta motion vector (-deltaMV).

2. Template Matching-based Modification Method

A cost array may be calculated by performing a search based on the position of the reference block of a current block within a predetermined search range. Here, the reference block of a current block is the same as described above in 'Bilateral Matching-Based Modification Method'. The cost array may be composed of a plurality of costs calculated for each search position within a search range. Each cost may be calculated as a sample difference between the template area of a current block and a template area at a search position. As an example, a cost may be calculated as the sum of absolute difference (SAD) between the template area of a current block and a template area at a search position. The template area at a search position may refer to the template area of a block that has a sample at the search position as a top-left sample.

The cost may be calculated based on all samples belonging to the template area of a current block and a template area at a search position or may be calculated based on some samples within a template area.

Here, some samples may refer to at least one of the even-numbered sample lines or at least one of the odd-numbered sample lines within a template area. In this case, a sample line may be a vertical sample line or a horizontal sample line.

Alternatively, a template area may include at least one of a top area, a left area, a top-left area, a bottom-left area or a top-right area adjacent to a block (i.e., a current block or a block at a search position). In this case, some samples may be limited to a sample belonging to an area at a specific position within a template area. As an example, an area at a specific position may include at least one of a top area or a left area.

Alternatively, a template area may include a neighbor sample line adjacent to a block and/or at least one non-neighbor sample line. In this case, some samples may be limited to a sample belonging to a sample line at a specific position within a template area. As an example, a sample line at a specific position is pre-defined equally for an encoding apparatus and a decoding apparatus, and may include at least one of a neighbor sample line, a non-neighbor sample line spaced apart by 1-sample from the boundary of a block or a non-neighbor sample line spaced apart by 2-sample from the boundary of a block. Information indicating the sample line at a specific position may be signaled through a bitstream.

A search position within the search range may be a position shifted by p in the x-axis direction and by q in the y-axis direction from the position of the reference block of a current block, and may be determined based on an offset that is pre-defined equally for an encoding apparatus and a decoding apparatus. It is the same as described above in 'Bilateral Matching-based Modification Method', and an overlapping description is omitted here.

Through the above-described method, a cost array may be calculated for each of the first prediction direction and the second prediction direction. A cost with the minimum value among a plurality of costs belonging to a cost array in the first prediction direction may be identified, and a delta motion vector in the first prediction direction may be determined based on an offset corresponding to an identified cost. Based on the determined delta motion vector in the first prediction direction, a motion vector predictor in the first prediction direction may be modified. Similarly, a cost with the minimum value among a plurality of costs belonging to a cost array in the second prediction direction may be identified, and a delta motion vector in the second prediction direction may be determined based on an offset corresponding to an identified cost. Based on the determined delta motion vector in the second prediction direction, a motion vector predictor in the second prediction direction may be modified.

According to whether a current block satisfies a predetermined first condition, any one of a bilateral matching-based modification method or a template matching-based modification method described above may be selectively used. The first condition according to the present disclosure may include at least one of a condition that a current block performs bidirectional prediction, a condition that a bidirectional reference picture for a current block exists before and/or after a current picture in time order or a condition that the POC difference between a current picture and each reference picture is the same. The time order may refer to output order (picture order count, POC) or encoding order.

When the above-described first condition is true, a bilateral matching-based modification method may be used, and when the first condition is false, a template matching-based modification method may be used. Alternatively, when all of the first conditions are true, a bilateral matching-based modification method may be used, and when even any one of the first conditions is false, a template matching-based modification method may be used. Alternatively, when even any one of the first conditions is true, a bilateral matching-based modification method may be used, and when all of the first conditions are false, a template matching-based modification method may be used.

As an example, when a current block performs bidirectional prediction, a bilateral matching-based modification method may be used, and otherwise, a template matching-based modification method may be used.

Alternatively, when a POC difference (diffPOC0) between a current picture including a current block and a reference picture in the first prediction direction is the same as a POC difference (diffPOC1) between a current picture and a reference picture in the second prediction direction, a bilateral matching-based modification method may be used, and otherwise, a template matching-based modification method may be used.

Alternatively, when a current block performs bidirectional prediction and diffPOC is the same as diffPOC1, a bilateral matching-based modification method may be used, and otherwise (i.e., when a current block does not perform bidirectional prediction or diffPOC is not the same as diffPOC1), a template matching-based modification method may be used.

Alternatively, when a current block performs bidirectional prediction, a bilateral matching-based modification method may be used even when diffPOC is not the same as diffPOC1. On the other hand, when a current block does not perform bidirectional prediction, a template matching-based modification method may be used.

An AMVP-MERGE mode according to the present disclosure may be applied even when a current block is a block encoded in an IBC (intra block copy) mode. When the inter prediction mode of a current block is an IBC mode, a current picture to which a current block belongs may be used as a reference picture, and otherwise, a method according to Embodiment 1 described above may be applied in the same manner.

Embodiment 2

The present disclosure relates to a case where the first and second prediction modes are an AMVP-MERGE mode. In particular, it relates to a case where motion information for bidirectional prediction is obtained for each of an AMVP mode and a merge mode.

In case of an AMVP-MERGE mode, two or more bidirectional motion information may be obtained for a current block. As an example, bidirectional motion information may be obtained based on an AMVP mode, and bidirectional motion information may be obtained based on a merge mode. However, it is not limited thereto, and unidirectional motion information may be obtained based on an AMVP mode, and bidirectional motion information may be obtained based on a merge mode. Alternatively, bidirectional motion information may be obtained based on an AMVP mode, and unidirectional motion information may be obtained based on a merge mode. Hereinafter, for convenience of a description, it is assumed that bidirectional motion information is obtained for each of an AMVP mode and a merge mode.

Motion information may be obtained based on an AMVP mode for each prediction direction of a current block. To this end, at least one of information regarding whether to perform bidirectional prediction, an MVP index, a reference picture index or MVD information may be signaled. When a current block performs bidirectional prediction, an MVP index, a reference picture index and MVD information may be signaled for each prediction direction.

Specifically, an MVP candidate list may be configured for each prediction direction of a current block. The MVP candidate list may include a plurality of MVP candidates. A motion vector predictor (MVP[0][X], MVP[0][1-X]) in a corresponding prediction direction may be derived from an MVP candidate list in each prediction direction. In MVP[0][X], [0] represents an AMVP mode, and [X] represents an LX direction. In other words, MVP[0][X] may represent a motion vector predictor in an LX direction derived based on an AMVP mode. MVP[0][X] may be derived based on an MVP candidate specified by an MVP index in an LX direction. As an example, MVP[0][X] may refer to the motion vector of an MVP candidate specified by an MVP index in an LX direction. Alternatively, MVP[0][X] may refer to a motion vector derived based on the motion vector of an MVP candidate specified by an MVP index in an LX direction and a motion vector difference. Here, a motion vector difference may be derived based on MVD information in an LX direction. Similarly, in MVP[0][1-X], [0] represents an AMVP mode, and [1-X] represents an L(1-X) direction. In other words, MVP[0][1-X] may represent a motion vector predictor in an L(1-X) direction derived based on an AMVP mode. MVP[0][1-X] may be derived based on an MVP candidate specified by an MVP index in an L(1-X) direction. As an example, MVP[0][1-X] may refer to the motion vector of an MVP candidate specified by an MVP index in an L(1-X) direction. Alternatively, MVP[0][1-X] may refer to a motion vector derived based on the motion vector of an MVP candidate specified by an MVP index in an L(1-X) direction and a motion vector difference. Here, a motion vector difference may be derived based on MVD information in an L(1-X) direction.

Meanwhile, the motion information of a current block may be obtained based on a merge mode. To this end, at least one of MVD information or a merge index specifying any one of a plurality of merge candidates belonging to a merge candidate list may be signaled. The motion information of a current block may be obtained based on the motion information of a merge candidate specified by a merge index. Here, motion information may include at least one of a motion vector (or, a motion vector predictor) or a reference picture index. When the specified merge candidate performs bidirectional prediction, bidirectional motion information may be obtained for a current block. However, when the specified merge candidate performs unidirectional prediction, unidirectional motion information may be obtained for a current block.

Specifically, a merge candidate list including a plurality of merge candidates may be configured for a current block. A bidirectional motion vector predictor (MVP[1][X], MVP[1][1-X]) may be derived from a merge candidate list. In MVP[1][X], [1] represents a merge mode, and [X] represents an LX direction. In other words, MVP[1][X] may represent a motion vector predictor in an LX direction derived based on a merge mode. MVP[1][X] may be derived based on a merge candidate specified by a merge index. As an example, MVP[1][X] may refer to the motion vector in an LX direction of a merge candidate specified by a merge index. Alternatively, MVP[1][X] may refer to a motion vector derived based on the motion vector in an LX direction of a merge candidate specified by a merge index and a motion vector difference. Here, a motion vector difference may be derived based on MVD information. Similarly, in MVP[1][1-X], [1] represents a merge mode, and [1-X] represents an L(1-X) direction. In other words, MVP[1][1-X] may represent a motion vector predictor in an L(1-X) direction derived based on a merge mode. MVP[1][1-X] may be derived based on a merge candidate specified by a merge index. As an example, MVP[1][1-X] may refer to the motion vector in an L(1-X) direction of a merge candidate specified by a merge index. Alternatively, MVP[1][1-X] may refer to a motion vector derived based on the motion vector in an L(1-X) direction of a merge candidate specified by a merge index and a motion vector difference. Here, a motion vector difference may be derived based on MVD information.

A bidirectional motion vector predictor derived based on an AMVP mode (MVP[0][X], MVP[0][1-X]) and a bidirectional motion vector predictor derived based on a merge mode (MVP[1][X], MVP[1][1-X]) may be paired by using a pre-defined method. One or more bidirectional motion vector predictors may be derived for a current block through the pairing.

As an example, one bidirectional motion vector predictor may be derived for a current block through the pairing. In this case, a bidirectional motion vector predictor for a current block may be {MVP[0][X], MVP[1][1-X]}. In other words, a bidirectional motion vector predictor for a current block may be derived as a combination of a motion vector predictor in an LX direction according to an AMVP mode and a motion vector predictor in an L(1-X) direction according to a merge mode. Alternatively, a bidirectional motion vector predictor for a current block may be {MVP[0][1-X], MVP[1][X]}. In other words, a bidirectional motion vector predictor for a current block may be derived as a combination of a motion vector predictor in an L(1-X) direction according to an AMVP mode and a motion vector predictor in an LX direction according to a merge mode.

Alternatively, two bidirectional motion vector predictors may be derived for a current block through the pairing. In this case, bidirectional motion vector predictors for a current block may be {MVP[0][X], MVP[1][1-X]} and {MVP[0][1-X], MVP[1][X]}. In other words, any one of the two bidirectional motion vector predictors may be derived as a combination of a motion vector predictor in an LX direction according to an AMVP mode and a motion vector predictor in an L(1-X) direction according to a merge mode. The other of the two bidirectional motion vector predictors may be derived as a combination of a motion vector predictor in an L(1-X) direction according to an AMVP mode and a motion vector predictor in an LX direction according to a merge mode.

When one bidirectional motion vector predictor is derived for a current block, the first prediction block of a current block may be derived based on MVP[0][X], and the second prediction block of a current block may be derived based on MVP[1][1-X]. Alternatively, when one bidirectional motion vector predictor is derived for a current block, the first prediction block of a current block may be derived based on MVP[0][1-X], and the second prediction block of a current block may be derived based on MVP[1][X].

When two bidirectional motion vector predictors are derived for a current block, the first prediction block of a current block may be derived based on MVP[0][X] and MVP[1][1-X]. As an example, the first prediction block of a current block may be derived based on the weighted sum between a reference block within an LX reference picture specified by MVP[0][X] and a reference block within an L(1-X) reference picture specified by MVP[1][1-X]. In addition, the second prediction block of a current block may be derived based on MVP[0][1-X] and MVP[1][X]. As an example, the first prediction block of a current block may be derived based on the weighted sum between a reference block within an L(1-X) reference picture specified by MVP[0][1-X] and a reference block within an LX reference picture specified by MVP[1][X].

Alternatively, when two bidirectional motion vector predictors are derived for a current block, any one of the two may be selectively used. For this purpose, an index specifying any one of the two bidirectional motion predictors may be used. The index may be signaled through a bitstream or may be derived based on a condition pre-defined equally for an encoding apparatus and a decoding apparatus. The first and second prediction blocks of a current block may be derived based on a bidirectional motion vector predictor specified by the index, respectively.

Hereinafter, for convenience of a description, any one of {MVP[0][X], MVP[1][1-X]} and {MVP[0][1-X], MVP[1][X]} derived through the above-described pairing is referred to as the first motion pair and the other is referred to as the second motion pair.

At least one of the first motion pair and the second motion pair may be modified based on any one of a bilateral matching-based modification method or a template matching-based modification method described above. In this case, the first prediction block and/or the second prediction block of a current block may be derived based on the modified motion pair.

According to whether a current block satisfies a predetermined first condition, the first motion pair may be modified based on any one of a bilateral matching-based modification method or a template matching-based modification method. The first condition here is the same as described in Embodiment 1, and an overlapping description will be omitted here.

According to whether a current block satisfies a predetermined second condition, the second motion pair may be modified based on any one of a bilateral matching-based modification method or a template matching-based modification method.

The second condition for the second motion pair may be defined independently of the first condition for the first motion pair. As an example, the second condition may include at least one of a condition that a current block performs bidirectional prediction, a condition that a bidirectional reference picture for a current block exists before and/or after a current picture in time order or a condition that the POC difference between a current picture and each reference picture is the same. The second condition for the second motion pair may be the same as the first condition for the first motion pair. Alternatively, the second condition for the second motion pair may be defined differently from the first condition for the first motion pair.

Alternatively, the second condition for the second motion pair may include at least one of a condition that the first condition for the first motion pair is false, a condition that a current block performs bidirectional prediction, a condition that the POC difference between a current picture and each reference picture is the same, a condition that a cost for the first motion pair calculated by a bilateral matching-based modification method or a template matching-based modification method is less than the first threshold value, a condition that the POC difference between a current picture and a reference picture for the second motion pair is less than or equal to the POC difference between a current picture and a reference picture for the first motion pair or a condition that a difference between the first motion pair (or, the modified first motion pair) and the second motion pair is greater than the second threshold value.

When the above-described second condition is true, a bilateral matching-based modification method may be used, and when the second condition is false, a template matching-based modification method may be used. Alternatively, when all of the second conditions are true, a bilateral matching-based modification method may be used, and when even any one of the second conditions is false, a template matching-based modification method may be used. Alternatively, when even any one of the second conditions is true, a bilateral matching-based modification method may be used, and when all of the second conditions are false, a template matching-based modification method may be used.

As an example, when the first condition for the first motion pair among the second conditions is true or when all of the remaining conditions among the second conditions are not true, a template matching-based modification method may be used, and otherwise, a bilateral matching-based modification method may be used.

An inter prediction method according to the present disclosure may be changed and applied as follows.

In an AMVP-MERGE mode, bidirectional motion information may be restricted to be derived for a current block. As an example, only a merge candidate with bidirectional motion information may be included in a merge candidate list. Alternatively, when a merge candidate specified by a merge index has unidirectional motion information, bidirectional motion information may be derived based on corresponding unidirectional motion information.

Alternatively, in an AMVP-MERGE mode, any one of MVP[0][X] or MVP[0][1-X] may be derived based on the other of the pre-derived MVP[0][X] or MVP[0][1-X]. As an example, pre-derived MVP[0][X] or MVP[0][1-X] may be mirrored to a reference picture in the opposite direction based on a current picture to derive an MVP with an opposite sign.

Alternatively, in an AMVP-MERGE mode, any one of MVP[1][X] or MVP[1][1-X] may be derived based on the other of the pre-derived MVP[1][X] or MVP[1][1-X]. As an example, pre-derived MVP[1][X] or MVP[1][1-X] may be mirrored to a reference picture in the opposite direction based on a current picture to derive an MVP with an opposite sign.

An AMVP-MERGE mode according to the present disclosure may be applied even when a current block is a block encoded in an IBC (intra block copy) mode. When the inter prediction mode of a current block is an IBC mode, a current picture to which a current block belongs may be used as a reference picture, and otherwise, a method according to Embodiment 2 described above may be applied in the same manner.

Embodiment 3

The present disclosure relates to a case where the first and second prediction modes are a combined inter and intra prediction (CIIP) mode. When a CIIP mode is applied to a current block, the first prediction block and the second prediction block may be derived for a current block, respectively.

The first prediction block according to the present disclosure may be derived based on inter prediction.

As an example, the first prediction block may be derived based on the unidirectional or bidirectional motion information of a current block. Here, unidirectional or bidirectional motion information may be derived based on an AMVP mode or a merge mode, which is the same as described in Embodiments 1 and 2.

The second prediction block according to the present disclosure may be derived based on intra prediction.

As an example, one intra prediction mode may be determined for a current block, and the second prediction block may be derived based on a corresponding intra prediction mode. The one intra prediction mode may be any one of a planar mode, a most probable mode (MPM), a matrix-based intra prediction mode (MIP) mode, a DIMD-based intra prediction mode to be described below or a TIMD-based intra prediction mode to be described below. An MPM may be one or more MPM candidates among a plurality of MPM candidates belonging to an MPM candidate list, which may be specified by an MPM index signaled through a bitstream.

The one intra prediction mode may be pre-defined in an encoding apparatus and a decoding apparatus. Alternatively, any one of the pre-defined intra prediction modes for a CIIP mode may be selected, and the selected intra prediction mode may be set as one intra prediction mode for the current block. Here, pre-defined intra prediction modes for a CIIP mode may include at least one of a planar mode, an MPM, an MIP mode, a DIMD-based intra prediction mode or a TIMD-based intra prediction mode. An index specifying any one of the pre-defined intra prediction modes may be used for the selection. The index may be signaled through a bitstream or may be derived based on a condition pre-defined equally for an encoding apparatus and a decoding apparatus.

1. Decoder Side Intra Mode Derivation (DIMD) Method

A gradient may be calculated based on at least two samples belonging to the neighboring area of a current block. Here, a gradient may include at least one of a horizontal gradient or a vertical gradient. The intra prediction mode of a current block may be derived based on at least one of the calculated gradient or a gradient amplitude. Here, a gradient amplitude may be determined based on the sum of the horizontal gradient and the vertical gradient. Through this derivation method, one intra prediction mode may be derived or at least two intra prediction modes may be derived for a current block.

As an example, a gradient may be calculated in the unit of a window having a predetermined size. An angle representing the directionality of a sample within a corresponding window may be calculated based on a calculated gradient. A calculated angle may correspond to any one of a plurality of pre-defined intra prediction modes described above. The amplitude of the gradient may be stored/updated for an intra prediction mode corresponding to the calculated angle. Through this process, an intra prediction mode corresponding to a calculated gradient may be determined for each window, and the amplitude of a gradient may be stored/updated for a determined intra prediction mode. The top T intra prediction modes having the largest amplitude among the stored amplitudes of the gradient may be selected, and a selected intra prediction mode may be set as the intra prediction mode of a current block. Here, T may be an integer of 1, 2, 3 or more.

A neighboring area used to calculate the gradient is an area which is pre-reconstructed before a current block, which may include at least one of a left area, a top area, a top-left area, a bottom-left area or a top-right area adjacent to a current block. The neighboring area may include at least one of a neighbor sample line adjacent to a current block, the first non-neighbor sample line spaced apart by 1-sample from a current block or the second non-neighbor sample line spaced apart by 2-sample from a current block. However, it is not limited thereto, and a non-neighbor sample line spaced apart by N-sample from a current block may be further included, and N may be an integer greater than or equal to 3.

The neighboring area may be an area pre-defined equally for an encoding apparatus and a decoding apparatus to calculate the gradient. Alternatively, the neighboring area may be variably determined based on information specifying the position of the neighboring area. In this case, information specifying the position of the neighboring area may be signaled through a bitstream. Alternatively, the position of the neighboring area may be determined based on at least one of whether a current block is positioned at the boundary of a coding tree unit, the size of a current block (e.g., the width, the height, the ratio of the width and height, the product of the width and height), the partitioning type of a current block, the prediction mode of a neighboring area or the availability of a neighboring area.

As an example, when a current block is positioned at the top boundary of a coding tree unit, at least one of the top area, the top-left area or the top-right area of a current block may not be referenced to calculate a gradient. When the width of a current block is greater than the height, any one of a top area or a left area (e.g., a top area) may be referenced to calculate a gradient, and the other (e.g., a left area) may not be referenced to calculate a gradient. Conversely, when the width of a current block is less than the height, any one of a top area or a left area (e.g., a left area) may be referenced to calculate a gradient, and the other (e.g., a top area) may not be referenced to calculate a gradient. When a current block is generated through horizontal block partitioning, a top area may not be referenced to calculate a gradient. Conversely, when a current block is generated through vertical block partitioning, a left area may not be referenced to calculate a gradient. When the neighboring area of a current block is encoded in an inter mode, a corresponding neighboring area may not be referenced to calculate a gradient. However, it is not limited thereto, and a corresponding neighboring area may be referenced to calculate a gradient regardless of the prediction mode of a neighboring area.

2. Template-based Intra Mode Derivation (TIMD) Method

From a decoder side, an intra prediction mode may be derived based on a template area adjacent to a current block, which will be described below in detail.

A cost for each of the predetermined candidate modes may be calculated.

The predetermined candidate modes may refer to a plurality of intra prediction modes pre-defined equally for an encoding apparatus and a decoding apparatus. Alternatively, for template area-based derivation, a candidate list composed of the candidate modes may be generated, and a cost may be calculated for candidate modes belonging to the candidate list. Alternatively, a cost may be calculated only for the top N candidate modes within the generated candidate list. Here, N may be a value pre-defined equally for an encoding apparatus and a decoding apparatus. As an example, N may be an integer of 2, 3, 4, 5 or more.

A candidate list for template area-based derivation may be configured in the same manner as the above-described MPM list. Alternatively, a candidate list may correspond to the above-described first MPM list or second MPM list. Alternatively, a candidate list may be configured as a combination of the above-described first group and second group (i.e., an MPM list) or may be configured as a combination of sub-groups of the first group and the second group (i.e., the first MPM list or the second MPM list).

The cost may be calculated as the sum of absolute difference (SAD) between reconstructed samples and prediction samples within a template area. Alternatively, the cost may also be calculated as the sum of absolute transformed difference (SATD) between reconstructed samples and prediction samples within a template area. Here, SATD may refer to SAD transformed into a frequency domain. As an example of the transform, Hadamard transform may be used, but is not limited thereto. The prediction samples of a template area may be generated based on the above-described candidate mode.

A template area for calculating the cost may be a pre-reconstructed area adjacent to a current block. As an example, the template area may include at least one of the top neighboring area, the left neighboring area, the top-left neighboring area, the bottom-left neighboring area or the top-right neighboring area of a current block.

The template area may be an area pre-defined equally for an encoding apparatus and a decoding apparatus to calculate the cost. Alternatively, the template area may be variably determined based on information specifying the position of the template area. In this case, information specifying the position of a template area may be signaled through a bitstream. Alternatively, the position of a template area may be determined based on at least one of whether a current block is positioned at the boundary of a coding tree unit, the size of a current block (e.g., the width, the height, the ratio of the width and height, the product of the width and height), the partitioning type of a current block, the prediction mode of a neighboring area or the availability of a neighboring area.

As an example, when a current block is positioned at the top boundary of a coding tree unit, at least one of the top neighboring area, the top-left neighboring area or the top-right neighboring area of a current block may not be referenced to calculate a cost. When the width of a current block is greater than the height, any one of a top neighboring area or a left neighboring area (e.g., a top neighboring area) may be referenced to calculate a cost, and the other (e.g., a left neighboring area) may not be referenced to calculate a gradient. Conversely, when the width of a current block is less than the height, any one of a top neighboring area or a left neighboring area (e.g., a left neighboring area) may be referenced to calculate a cost, and the other (e.g., a top neighboring area) may not be referenced to calculate a cost. When a current block is generated through horizontal block partitioning, a top neighboring area may not be referenced to calculate a cost. Conversely, when a current block is generated through vertical block partitioning, a left neighboring area may not be referenced to calculate a cost. When the neighboring area of a current block is encoded in an inter mode, a corresponding neighboring area may not be referenced to calculate a cost. However, it is not limited thereto, and a corresponding neighboring area may be referenced to calculate a cost regardless of the prediction mode of a neighboring area.

The template area may be composed of N reference sample lines. Here, N may be an integer of 1, 2, 3, 4 or more. The number of reference sample lines configuring a template area may be the same regardless of the position of a neighboring area or may vary depending on the position of a neighboring area. A cost may be calculated based on all samples belonging to the template area. Alternatively, a cost may be calculated by using only a reference sample line at a predetermined position within the template area. Alternatively, a cost may be calculated based on all samples belonging to a reference sample line at the predetermined position or a cost may be calculated by using only a sample at a predetermined position on a reference sample line at the predetermined position. The position of a sample and/or a reference sample line for the cost calculation may be determined based on at least one of whether a current block is positioned at the boundary of a coding tree unit, the size of a current block (e.g., the width, the height, the ratio of the width and height, the product of the width and height), the partitioning type of a current block, the prediction mode of a neighboring area or the availability of a neighboring area. Alternatively, information indicating the position of a reference sample line for the cost calculation may be signaled through a bitstream.

One candidate mode with the minimum cost among the costs calculated for the candidate modes may be selected. As an example, a cost for five candidate modes within a candidate list may be calculated, respectively. The five candidate modes in a candidate list may be reordered in ascending order of the calculated costs. The top one candidate mode may be selected among the 5 reordered candidate modes.

Alternatively, at least two candidate modes with the minimum cost among the costs calculated for the candidate modes may also be selected. As an example, a cost for five candidate modes within a candidate list may be calculated, respectively. The five candidate modes in a candidate list may be reordered in ascending order of the calculated costs. The top two candidate modes may be selected among the 5 reordered candidate modes.

One or more candidate modes selected through the above-described process may be set as the intra prediction mode of a current block.

Alternatively, when at least two candidate modes are selected through the above-described process, the intra prediction mode of a current block may be derived based on a comparison between the selected candidate modes and/or a comparison between at least one of the selected candidate modes and a threshold value. As an example, the intra prediction mode of a current block may be derived based on whether selected candidate modes satisfy the following condition.

$$[\text{Condition}] \ \text{costMode2} < (K \ x \ \text{costMode1})$$

In the condition, costMode1 may refer to a cost calculated based on any one of the selected candidate modes, and costMode2 may refer to a cost calculated based on another of the selected candidate modes. As an example, costMode1 may refer to a cost calculated based on a candidate mode with a smaller cost among the selected candidate modes, and costMode2 may refer to a cost calculated based on a candidate mode with a larger cost among the selected candidate modes. In the condition, K represents a predetermined comparison factor, which may be a value pre-defined equally for an encoding apparatus and a decoding apparatus. As an example, K may be an integer of 1, 2 or more or may refer to a real number such as 1/2 or 1/4.

When the condition is satisfied, the selected candidate modes may be set as the intra prediction mode of a current block. On the other hand, when the condition is not satisfied, a candidate mode with a cost of costMode1 may be set as the intra prediction mode of a current block, and a candidate mode with a cost of costMode2 may not be used as the intra prediction mode of a current block.

Alternatively, two or more intra prediction modes may be determined for a current block, and the second prediction block may be derived based on the two or more determined intra prediction modes. In other words, a prediction block may be derived based on two or more intra prediction modes, respectively, and the second prediction block may be derived based on the weighted sum between the two or more derived prediction blocks. As an example, when two intra prediction modes are determined for a current block, the second prediction block may be derived as shown in Equation 1 below.

[Equation 1]

$$P_{intra} = ((4 - w1) * P_{intra0} + w1 * P_{intra1} + \text{offset}) >> \text{shift}$$

In Equation 1, $P_{intra}$ represents the second prediction block (or, the sample of the second prediction block). $P_{intra0}$ represents a prediction block (or, the sample of a prediction block) derived based on any one of the two intra prediction modes, and $P_{intra1}$ represents a prediction block (or, the sample of a prediction block) derived based on the other of the two intra prediction modes. w1 represents a weight for the weighted sum between two prediction blocks. As an example, when shift is 2 and offset is 2, w1 may be determined as an integer in the range of 1 to 3. Alternatively, when shift is 3, 4 or 5, offset may be 4, 8 or 16, respectively, and w1 may be determined as an integer in the range of 1 to 7, 1 to 15 or 1 to 32, respectively.

The two or more intra prediction modes may include at least two of a planar mode, an MPM, an MIP mode, a DIMD-based intra prediction mode, or a TIMD-based intra prediction mode. The number of intra prediction modes used to derive the second prediction block may be determined according to a pre-defined number.

Embodiment 4

The present disclosure relates to a case where the first prediction mode is a CIIP mode and the second prediction mode is an intra mode. In this case, the first prediction block and the second prediction block may be derived for a current block, respectively.

The first prediction block according to the present disclosure may be derived based on inter prediction and intra prediction.

As an example, an inter prediction block may be derived based on inter prediction, and an intra prediction block may be derived based on intra prediction. The first prediction block may be derived based on the derived inter prediction block and intra prediction block.

The inter prediction block may be derived based on the unidirectional or bidirectional motion information of a current block. Here, unidirectional or bidirectional motion information may be derived based on an AMVP mode or a merge mode, which is the same as described in Embodiments 1 and 2.

In addition, one intra prediction mode may be determined for a current block, and an intra block may be derived based on a corresponding intra prediction mode. The one intra prediction mode may be any one of a planar mode, an MPM, an MIP mode, a DIMD-based intra prediction mode, or a TIMD-based intra prediction mode. A method for determining one intra prediction mode for a current block is the same as described in Embodiment 3, and an overlapping description will be omitted here.

The first prediction block may be derived through the weighted sum between the derived inter prediction block and intra prediction block. The first prediction block may be derived as shown in Equation 2 below.

$$[\text{Equation 2}]$$
$$P_{temp} = ((4 - w2) * P_{inter} + w2 * P_{intra} + offset) >> shift$$

In Equation 2, $P_{temp}$ represents the first prediction block (or, the sample of the first prediction block). $P_{inter}$ represents an inter prediction block (or, the sample of an inter prediction block), and $P_{intra}$ represents an intra prediction block (or, the sample of an intra prediction block). w2 represents a weight for the weighted sum between inter and intra prediction blocks. The values of shift, offset and a weight in Equation 2 are the same as described in Equation 1.

The second prediction block according to the present disclosure may be derived based on intra prediction.

As an example, an additional intra prediction mode may be determined for a current block, and the second prediction block may be derived based on a corresponding intra prediction mode. The additional intra prediction mode is an intra prediction mode different from an intra prediction mode for the intra prediction block of the first prediction block, which may be any one of a planar mode, an MPM, an MIP mode, a DIMD-based intra prediction mode or a TIMD-based intra prediction mode. The additional intra prediction mode may be determined based on a method for determining one intra prediction mode for a current block described in Embodiment 3, and a detailed description will be omitted here.

However, the derivation of the second prediction block (or, the determination of an additional intra prediction mode) may also be omitted according to a condition pre-defined equally for an encoding apparatus and a decoding apparatus.

Embodiment 5

The present disclosure relates to a case where the first prediction mode is a CIIP mode and the second prediction mode is an intra mode. In this case, the first prediction block and the second prediction block may be derived for a current block, respectively.

The first prediction block according to the present disclosure may be derived based on inter prediction and intra prediction.

As an example, an inter prediction block may be derived based on inter prediction, and an intra prediction block may be derived based on intra prediction. The first prediction block may be derived based on the weighted sum between the derived inter prediction block and intra prediction block.

The inter prediction block may be derived based on the unidirectional or bidirectional motion information of a current block. Here, unidirectional or bidirectional motion information may be derived based on an AMVP mode or a merge mode, which is the same as described in Embodiments 1 and 2.

In addition, two or more intra prediction modes may be determined for a current block, and an intra block may be derived based on any one of the two or more intra prediction modes. The two or more intra prediction modes may include at least two of a planar mode, an MPM, an MIP mode, a DIMD-based intra prediction mode, or a TIMD-based intra prediction mode. A method for determining two or more intra prediction modes for a current block is the same as described in Embodiment 3, and an overlapping description will be omitted here.

The first prediction block may be derived through the weighted sum between the derived inter prediction block and intra prediction block. The first prediction block may be derived as shown in Equation 3 below.

[Equation 3]
$$P_{temp} = ((4 - w3) * P_{inter} + w3 * P_{intra} + offset) >> shift$$

In Equation 3, $P_{temp}$ represents the first prediction block (or, the sample of the first prediction block). $P_{inter}$ represents an inter prediction block (or, the sample of an inter prediction block), and $P_{intra}$ represents an intra prediction block (or, the sample of an intra prediction block). w3 represents a weight for the weighted sum between inter and intra prediction blocks. The values of shift, offset and a weight in Equation 3 are the same as described in Equation 1.

The second prediction block according to the present disclosure may be derived based on intra prediction.

As an example, the second prediction block may be derived based on another of the two or more intra prediction modes determined for the current block.

Embodiment 6

The present disclosure relates to a case where the first prediction mode is a IBC mode and the second prediction mode is an intra mode. In this case, the first prediction block and the second prediction block may be derived for a current block, respectively.

The first prediction block according to the present disclosure may be derived based on an IBC mode.

An IBC candidate list may be configured for a current block. The IBC candidate list may include a plurality of IBC candidates, and a plurality of IBC candidates may be derived based on a neighboring block adjacent to a current block (or, the block vector of a neighboring block). One or more block vectors may be derived from the IBC candidate list. The first prediction block may be derived based on the derived block vector.

As an example, any one of a plurality of IBC candidates belonging to the IBC candidate list of a current block may be selected. An index specifying any one of a plurality of IBC candidates may be used for the selection. Here, an index may be signaled through a bitstream. The block vector of a current block may be derived based on the block vector of the selected IBC candidate. A reference block specified based on the derived block vector may be set as the first prediction block. Here, a reference block may belong to a current picture to which a current block belongs.

Alternatively, at least two of a plurality of IBC candidates belonging to the IBC candidate list of a current block may be selected. For this purpose, the first index specifying any one of a plurality of IBC candidates and the second index specifying another of a plurality of IBC candidates may be used. The first and second indexes may be signaled through a bitstream. Alternatively, the first index may be signaled through a bitstream, and the second index may be derived based on a signaled first index. The first block vector of a current block may be derived based on the block vector of an IBC candidate selected based on the first index. The second block vector of a current block may be derived based on the block vector of an IBC candidate selected based on the second index. The first prediction block may be derived through the weighted sum of the first reference block specified based on the first block vector and the second reference block specified based on the second block vector. Here, the first and second reference blocks may belong to a current picture to which a current block belongs.

Meanwhile, two different IBC candidates may be selected among a plurality of IBC candidates based on the first and second indexes. For example, an index may be allocated to each of a plurality of IBC candidates belonging to an IBC candidate list. An IBC candidate having the same index as the first index may be selected from an IBC candidate list. When the second index is less than the first index, an IBC candidate having the same index as the second index may be selected from an IBC candidate list. On the other hand, when the second index is greater than or equal to the first index, an IBC candidate having the same index as a value obtained by adding 1 to the second index may be selected from an IBC candidate list.

The second prediction block according to the present disclosure may be derived based on intra prediction.

As an example, one intra prediction mode may be determined for a current block, and the second prediction block may be derived based on a corresponding intra prediction mode. The one intra prediction mode may be any one of a planar mode, an MPM, an MIP mode, a DIMD-based intra prediction mode, or a TIMD-based intra prediction mode. It is the same as described in Embodiment 3.

Alternatively, two or more intra prediction modes may be determined for a current block, and the second prediction block may be derived based on the two or more determined intra prediction modes. In other words, a prediction block may be derived based on two or more intra prediction modes, respectively, and the second prediction block may be derived based on the weighted sum between the two or more derived prediction blocks. It is the same as described in Embodiment 3, and an overlapping description will be omitted here.

Referring to FIG. 4, the final prediction block of a current block may be derived based on a plurality of prediction blocks for a current block S410.

In other words, the prediction block of a current block may be derived based on the weighted sum of the first prediction block and the second prediction block of a current block. As an example, the prediction block of a current block may be derived as shown in Equation 4 below.

[Equation 4]

$$P_{final} = ((4 - w4) * P_0 + w4 * P_1 + offset) >> shift$$

In Equation 4, $P_{final}$ represents the prediction block of a current block (or, the sample of a prediction block). $P_0$ represents the first prediction block (or, the sample of the first prediction block), and $P_1$ represents the second prediction block (or, the sample of the second prediction block). w4 represents a weight for the weighted sum between the first and second prediction blocks. As an example, when shift is 2 and offset is 2, w4 may be determined as an integer in the range of 1 to 3. Alternatively, when shift is 3, 4 or 5, offset may be 4, 8 or 16, respectively, and w4 may be determined as an integer in the range of 1 to 7, 1 to 15 or 1 to 32, respectively.

FIG. 5 shows a schematic configuration of an inter predictor 332 that performs an inter prediction method according to the present disclosure.

Referring to FIG. 5, an inter predictor 332 may include a multi-prediction block deriver 500 and a multi-prediction block weighter 510.

A multi-prediction block deriver 500 may derive a plurality of prediction blocks for a current block. The plurality of prediction blocks may include the first prediction block and the second prediction block. The first prediction block may be derived based on the first prediction mode, and the second prediction block may be derived based on the second prediction mode. Here, the first prediction mode and the second prediction mode may be the same prediction mode or may be a different prediction mode. The first and second prediction blocks according to the first and second prediction modes may be derived based on any one of the above-described Embodiments 1 to 6, and a detailed description will be omitted here.

A multi-prediction block weighter 510 may derive the final prediction block of a current block based on a plurality of prediction blocks for a current block. In other words, a multi-prediction block weighter 510 may derive the prediction block of a current block based on the weighted sum of the first prediction block and the second prediction block of a current block. It is the same as described by referring to FIG. 4.

FIG. 6 shows an inter prediction method performed by an encoding apparatus 200 as an embodiment according to the present disclosure.

Referring to FIG. 6, a plurality of prediction blocks may be derived for a current block S600.

The plurality of prediction blocks may include the first prediction block and the second prediction block. The first prediction block may be derived based on the first prediction mode, and the second prediction block may be derived based on the second prediction mode. Here, the first prediction mode and the second prediction mode may be the same prediction mode or may be a different prediction mode. The first and second prediction blocks according to the first and second prediction modes may be derived based on any one of the above-described Embodiments 1 to 6, and a detailed description will be omitted here.

Referring to FIG. 6, the final prediction block of a current block may be derived based on a plurality of prediction blocks for a current block S610. In other words, the prediction block of a current block may be derived based on the weighted sum of the first prediction block and the second prediction block of a current block, which is the same as described by referring to FIG. 4.

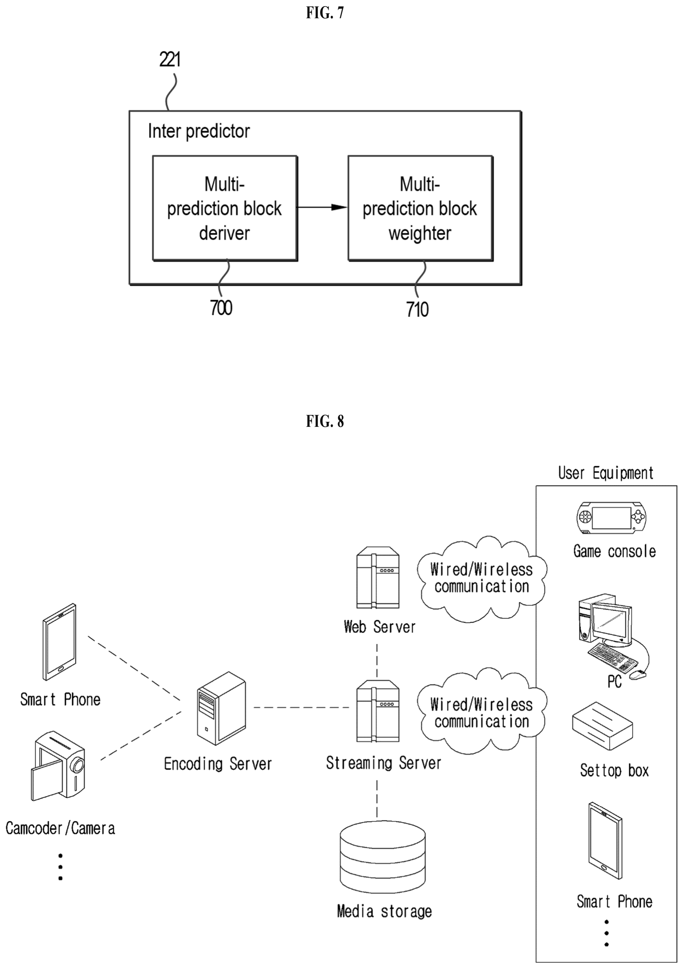

FIG. 7 shows a schematic configuration of an inter predictor 221 that performs an inter prediction method according to the present disclosure.

Referring to FIG. 7, an inter predictor 221 may include a multi-prediction block deriver 700 and a multi-prediction block weighter 710.

A multi-prediction block deriver 700 may derive a plurality of prediction blocks for a current block. The plurality of prediction blocks may include the first prediction block and the second prediction block. The first prediction block may be derived based on the first prediction mode, and the second prediction block may be derived based on the second prediction mode. Here, the first prediction mode and the second prediction mode may be the same prediction mode or may be a different prediction mode. The first and second prediction blocks according to the first and second prediction modes may be derived based on any one of the above-described Embodiments 1 to 6, and a detailed description will be omitted here.

A multi-prediction block weighter 710 may derive the final prediction block of a current block based on a plurality of prediction blocks for a current block. In other words, a multi-prediction block weighter 510 may derive the prediction block of a current block based on the weighted sum of the first prediction block and the second prediction block of a current block. It is the same as described by referring to FIG. 4.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, comprising:

   deriving a plurality of prediction blocks for a current block, wherein the plurality of prediction blocks includes a first prediction block and a second prediction block;
   deriving a final prediction block of the current block based on the first prediction block and the second prediction block; and
   reconstructing the current block based on the final prediction block of the current block.

2. The method of claim 1, wherein the first prediction block is derived based on at least one of a first L0 motion vector predictor or a second L1 motion vector predictor,

   wherein the second prediction block is derived based on at least one of a first L1 motion vector predictor or a second L0 motion vector predictor, and
   wherein at least one of the first L0 motion vector predictor or the first L1 motion vector predictor is derived based on a first prediction mode, and at least one of the second L0 motion vector predictor or the second L1 motion vector predictor is derived based on a second prediction mode.

3. The method of claim 2, wherein the first prediction mode is an AMVP mode, and
   wherein the second prediction mode is a merge mode.

4. The method of claim 1, wherein the first L0 motion vector predictor is derived based on the first prediction mode, and
   wherein the first L1 motion vector predictor is derived based on the pre-derived first L0 motion vector predictor.

5. The method of claim 2, wherein the at least one of the first L0 motion vector predictor or the second L1 motion vector predictor is modified based on any one of a bilateral matching-based modification method or a template matching-based modification method, and
   wherein based on a pre-defined first condition, the any one of the bilateral matching-based modification method or the template matching-based modification method is selected.

6. The method of claim 5, wherein the at least one of the first L1 motion vector predictor or the second L0 motion vector predictor is modified based on any one of a bilateral matching-based modification method or a template matching-based modification method, and
   wherein based on a pre-defined second condition, the any one of the bilateral matching-based modification method or the template matching-based modification method is selected.

7. The method of claim 6, wherein whether the second condition is satisfied is determined based on whether the first condition is satisfied.

8. The method of claim 1, wherein the first prediction block is derived based on an inter mode, and
   wherein the second prediction block is derived based on one or more intra prediction modes for the current block.

9. The method of claim 8, wherein the one or more intra prediction modes for the current block include at least one of a planar mode, an MPM, an MIP mode, a DIMD-based intra prediction mode, or a TIMD-based intra prediction mode.

10. The method of claim 1, wherein the first prediction block is derived based on an inter prediction block and an intra prediction block of the current block, and
    wherein the second prediction block is derived based on an additional intra prediction mode for the current block.

11. The method of claim 1, wherein the first prediction block is derived based on one or more block vectors derived from an IBC candidate list of the current block, and
    wherein the second prediction block is derived based on one or more intra prediction modes for the current block.

12. An image encoding method, comprising:

    deriving a plurality of prediction blocks for a current block, wherein the plurality of prediction blocks includes a first prediction block and a second prediction block;
    deriving a final prediction block of the current block based on the first prediction block and the second prediction block;
    deriving a residual block of the current block based on the final prediction block of the current block; and
    encoding the residual block of the current block.

13. A computer-readable storage medium storing a bitstream generated by an image encoding method, the image encoding method comprising:

    deriving a plurality of prediction blocks for a current block, wherein the plurality of prediction blocks includes a first prediction block and a second prediction block;
    deriving a final prediction block of the current block based on the first prediction block and the second prediction block;
    deriving a residual block of the current block based on the final prediction block of the current block; and
    encoding the residual block of the current block.

14. A method for transmitting data, comprising:

    obtaining a bitstream for image information, wherein the bitstream is generated based on deriving a plurality of prediction blocks including a first prediction block and a second prediction block for a current block, deriving a final prediction block of the current block based on the first prediction block and the second prediction block, deriving a residual block of the current block based on the final prediction block of the current block, and encoding the residual block of the current block; and
    transmitting data including the bitstream.

**FIG.1**

**FIG.2**

**FIG.3**

**FIG.4**

| Derive a plurality of prediction blocks for current block | — S400 |

↓

| Derive final prediction block of current block based on a plurality of prediction blocks for current block | — S410 |

**FIG. 5**

332

Inter predictor

| Multi-prediction block deriver | → | Multi-prediction block weighter |

500        510

**FIG. 6**

| Derive a plurality of prediction blocks for current block | — S600 |

↓

| Derive final prediction block of current block based on a plurality of prediction blocks for current block | — S610 |

**FIG. 7**

**FIG. 8**

## INTERNATIONAL SEARCH REPORT

| | International application No. |
|---|---|
| | **PCT/KR2024/005395** |

### A. CLASSIFICATION OF SUBJECT MATTER

**H04N 19/105**(2014.01)i; **H04N 19/109**(2014.01)i; **H04N 19/11**(2014.01)i; **H04N 19/513**(2014.01)i; **H04N 19/577**(2014.01)i; **H04N 19/593**(2014.01)i; **H04N 19/176**(2014.01)i

According to International Patent Classification (IPC) or to both national classification and IPC

### B. FIELDS SEARCHED

Minimum documentation searched (classification system followed by classification symbols)

H04N 19/105(2014.01); H04N 19/103(2014.01); H04N 19/107(2014.01); H04N 19/109(2014.01); H04N 19/11(2014.01); H04N 19/117(2014.01); H04N 19/159(2014.01); H04N 19/176(2014.01); H04N 19/513(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 복수(multiple), 예측(predict), 움직임 벡터 예측자(motion vector predictor, MVP), 머지(merge), 복원(reconstruct)

### C. DOCUMENTS CONSIDERED TO BE RELEVANT

| Category* | Citation of document, with indication, where appropriate, of the relevant passages | Relevant to claim No. |
|---|---|---|
| X | WO 2023-274181 A1 (BEIJING BYTEDANCE NETWORK TECHNOLOGY CO., LTD. et al.) 05 January 2023 (2023-01-05)<br>See paragraphs [0049], [0068]-[0074], [0083]-[0084], [0093] and [0117]; claims 1, 6, 46, 52, 55, 58, 61-63 and 111; and figures 2-3 and 23. | 1-14 |
| X | KR 10-2023-0042673 A (ELECTRONICS AND TELECOMMUNICATIONS RESEARCH INSTITUTE) 29 March 2023 (2023-03-29)<br>See paragraphs [0082], [0087]-[0091] and [0113]; and claim 1. | 1,12-14 |
| X | KR 10-2023-0040295 A (KT CORPORATION) 22 March 2023 (2023-03-22)<br>See paragraphs [0003], [0056]-[0063] and [0083]; claims 1 and 15; and figures 1-2. | 1,12-14 |
| X | KR 10-2021-0019481 A (INDUSTRY ACADEMY COOPERATION FOUNDATION OF SEJONG UNIVERSITY) 22 February 2021 (2021-02-22)<br>See paragraphs [0044], [0120], [0138] and [0313]; claim 1; and figures 10 and 28. | 1,12-14 |

✓ Further documents are listed in the continuation of Box C.    ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 July 2024** | **07 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/005395**

| C. | DOCUMENTS CONSIDERED TO BE RELEVANT | |
|---|---|---|
| Category* | Citation of document, with indication, where appropriate, of the relevant passages | Relevant to claim No. |
| X | KR 10-2020-0020730 A (QUALCOMM INCORPORATED) 26 February 2020 (2020-02-26)<br>See paragraphs [0138]-[0139] and [0148]; and claim 8. | 1,12-14 |

Form PCT/ISA/210 (second sheet) (July 2022)

## INTERNATIONAL SEARCH REPORT
### Information on patent family members

International application No.

**PCT/KR2024/005395**

| Patent document cited in search report | | | Publication date (day/month/year) | Patent family member(s) | | | Publication date (day/month/year) |
|---|---|---|---|---|---|---|---|
| WO | 2023-274181 | A1 | 05 January 2023 | CN | 117581538 | A | 20 February 2024 |
| | | | | US | 2024-0121383 | A1 | 11 April 2024 |
| KR | 10-2023-0042673 | A | 29 March 2023 | CN | 116886929 | A | 13 October 2023 |
| | | | | CN | 116886930 | A | 13 October 2023 |
| | | | | KR | 10-2018-0061041 | A | 07 June 2018 |
| | | | | KR | 10-2021-0137982 | A | 18 November 2021 |
| | | | | KR | 10-2328179 | B1 | 18 November 2021 |
| | | | | WO | 2018-097692 | A2 | 31 May 2018 |
| | | | | WO | 2018-097692 | A3 | 26 July 2018 |
| KR | 10-2023-0040295 | A | 22 March 2023 | CN | 117941356 | A | 26 April 2024 |
| | | | | WO | 2023-043223 | A1 | 23 March 2023 |
| KR | 10-2021-0019481 | A | 22 February 2021 | CN | 116962676 | A | 27 October 2023 |
| | | | | EP | 3557867 | A1 | 23 October 2019 |
| | | | | KR | 10-2024-0031287 | A | 07 March 2024 |
| | | | | KR | 10-2670040 | B1 | 28 May 2024 |
| | | | | US | 11665337 | B2 | 30 May 2023 |
| | | | | US | 2023-0269367 | A1 | 24 August 2023 |
| | | | | WO | 2018-131982 | A1 | 19 July 2018 |
| KR | 10-2020-0020730 | A | 26 February 2020 | CN | 116996671 | A | 03 November 2023 |
| | | | | EP | 3646601 | A1 | 06 May 2020 |
| | | | | EP | 4250737 | A2 | 27 September 2023 |
| | | | | EP | 4250737 | A3 | 06 December 2023 |
| | | | | JP | 2023-162350 | A | 08 November 2023 |
| | | | | JP | 7341901 | B2 | 11 September 2023 |
| | | | | US | 11470330 | B2 | 11 October 2022 |
| | | | | US | 2020-0396463 | A1 | 17 December 2020 |
| | | | | WO | 2019-006105 | A1 | 03 January 2019 |

Form PCT/ISA/210 (patent family annex) (July 2022)